# EUROPÄISCHE PATENTSCHRIFT

(11) **EP 0 471 061 B1**
(45) Veröffentlichungstag und Bekanntmachung des Hinweises auf die Patenterteilung: **27.10.1993**
(21) Anmeldenummer: 91905877.6
(22) Anmeldetag: 01.03.1991
(51) Int. Cl.: B65G 25/10, B24C 9/00

(54) **FÖRDEREINRICHTUNGEN FÜR SCHÜTTGUT, INSBESONDERE STRAHLMITTEL FÜR SANDSTRAHLANLAGEN**
CONVEYOR FOR BULK MATERIAL, ESPECIALLY BLASTING AGENTS FOR SANDBLASTING INSTALLATIONS
DISPOSITIF TRANSPORTEUR POUR MATERIAUX EN VRAC, NOTAMMENT POUR PRODUITS ABRASIFS POURS INSTALLATIONS DE SABLAGE

(30) Priorität: 02.03.1990 AT 504/90
(43) Veröffentlichungstag der Anmeldung: 19.02.1992
(73) Patentinhaber: Hans Oetiker AG Maschinen- und Apparatefabrik, 8812 Horgen (CH)
(72) Erfinder: WINTER, Alfred, A-3424 Wolfpassing (AT)
(74) Vertreter: Müllner, Erwin, Dr.
(86) Internationale Anmeldenummer: AT9100035
(87) Internationale Veröffentlichungsnummer: WO9113014

(56) Entgegenhaltungen:
- DE-A- 314 329
- DE-A- 3 429 206
- FR-A- 2 160 062
- FR-A- 2 380 107
- FR-A- 2 563 195

## Beschreibung

Die Erfindung betrifft eine Fördereinrichtung für Schüttgut, insbesondere Strahlmittel für Sandstrahlanlagen mit mindestens einem Längsförderer, der in einen Querförderer einmündet, wobei die Förderer eine Vielzahl von in Förderrichtung hin- und hergehenden, nach einer Seite umklappbaren Förderleisten aufweisen. Eine solche Fördereinrichtung ist aus der DE-A-3 429 206 bekannt.

Bei den bekannten Sandstrahlanlagen liegt über dem Hallenboden ein Gitterrost, unter welchem mehrere Längsförderer den herabfallenden Sand beim Sandstrahlen mittels der Förderleisten in eine Richtung schieben, wo sie in eine Vertiefung im Hallenboden fallen, in der ein Querförderer den weiteren Transport des Strahlsandes übernimmt. Der Querförderer schiebt den aus dem Längsförderern zugeschobenen Strahlsand in eine Grube, aus der ein Becherwerk den Sand hochfördert und einer Aufbereitungsanlage zuführt. Sandstrahlanlagen, die mit einer solchen Fördereinrichtung ausgestattet sind, können kontinuierlich arbeiten. Die Antriebe der einzelnen Längsförderer und des Querförderers arbeiten individuell mit Kurbelgetriebe, die die umklappbaren Förderleisten in eine hin- und hergehende Bewegung versetzen. Die Förderwirkung ergibt sich dadurch, daß die Förderleisten, deren Abstand kleiner oder gleich dem Hub des Antriebs ist, in Förderrichtung eine vertikale Position einnehmen und somit den Sand vor sich herschieben, während sie bei der Retourbewegung umklappen und über den zu fördernden Sand hinweg in die Ausgangsstellung gleiten. Bei einer bekannten Ausführung werden die Förderleisten durch vertikal angeordnete starre Rechen gebildet, an welchen einseitig Gummilappen anliegen. In der der Förderrichtung entsprechenden Schubrichtung werden die Gummilappen gegen die Rechen gedrückt. Bei der Gegenbewegung (Freilaufbewegung) weichen die Gummilappen zurück und streichen über die Oberfläche des Sandes, ohne diesen mitzunehmen. Der Wirkungsgrad dieses Systems wird durch die starren, nicht zurückweichenden Zinken des Rechens beeinträchtigt. Diese Fördereinrichtung verlangt Umbaumaßnahmen der Halle durch die erforderlichen Niveausprünge. Ferner unterliegen die Gummileisten einer sehr starken Abnützung und müssen oft ausgetauscht werden, wobei eine Demontage von verschraubten Klemmleisten erforderlich ist.

Die Erfindung zielt darauf ab, eine Fördereinrichtung der eingangs genannten Art hinsichtlich der Förderleitstung und der Wartung zu verbessern und so auszubilden, daß Umbauarbeiten in einer Halle entfallen können. Dies wird dadurch erreicht, daß Längsförderer und Querförderer in ein- und derselben Ebene angeordnet sind und der bzw. die Längsförderer parallel zueinander stillstehende seitliche Begrenzungsprofile, z.B. I-Profile, mit gegeneinander vorspringenden Rollen aufweisen, auf welchen mindestens ein als Schlitten ausgebildeter Rahmen, in den die Förderleisten eingehängt sind, vorzugsweise pneumatisch längsverschiebbar gelagert ist und daß der analog ausgebildete Querförderer im Bereich der Einmündung bzw. Einmündungen des oder der Längsförderer seitlich offen ist und ein die Förderleisten tragender Rahmen des Querförderers auf Rollen gelagert ist, die einmündungsseitig auf den Stirnseiten der Begrenzungsprofile des oder der Längsförderer angeordnet sind, während die Rollen außerhalb der Einmündungsbereiche auf eigenen Begrenzungsprofilen gelagert sind. Die Längsförderer schieben dadurch den Sand seitlich in den Querförderer hinein, ohne daß dieser in einem tiefer liegenden Niveau angeordnet sein muß. Es ist zweckmäßig, wenn die Rahmen der Längs- und des Querförderers an ihren seitlichen Holmen oder Blechen einander gegenüberliegend etwa vertikal ausgerichtete Haltevorsprünge, z.B. Blechnasen, aufweisen, in welche die als V-förmig abgewinkelte Bleche mit einem im Querschnitt langen und einen kurzen Schenkel ausgebildeten Förderleisten eingehängt sind. Diese Förderleisten klappen beim Leerhub zur Gänze zurück, sodaß der Wirkungsgrad verbessert ist. Der Austausch kann durch einfaches Abheben der Förderleisten erfolgen. Ferner ist es vorteilhaft, wenn die Holme ein T-Profil aufweisen, dessen einer waagrechter Profilsteg auf den Rollen aufliegt, während der andere waagrechte Profilsteg die Förderleisten randseitig übergreift. Dadurch wird das Abheben der Förderleisten verhindert.

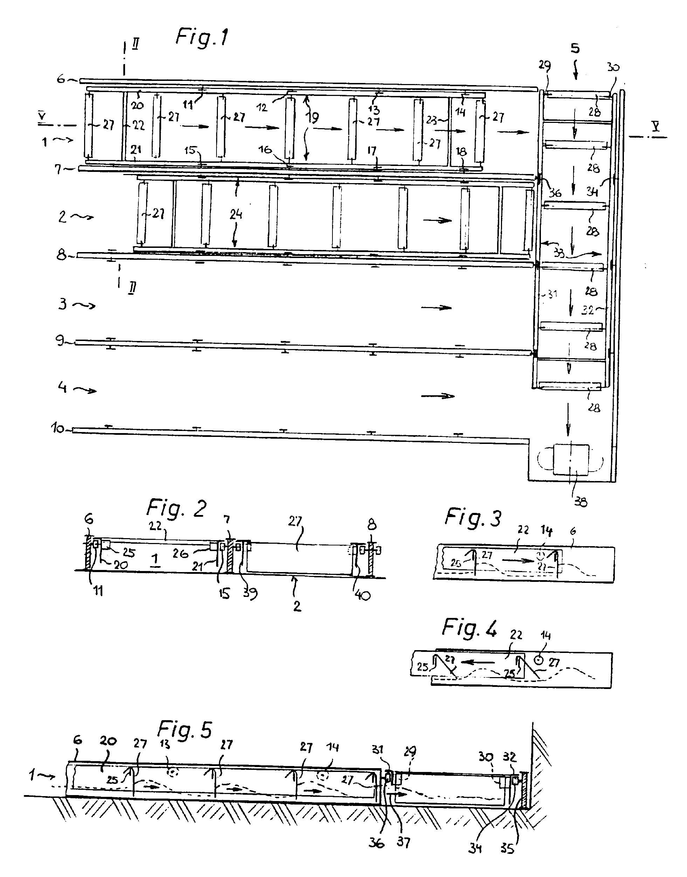

Ein Ausführungsbeispiel des Erfindungsgegenstandes ist in den Zeichnungen dargestellt. Fig. 1 zeigt eine Draufsicht auf den Boden einer Strahlkabine in einer Halle bei abgenommenem Gitterrost, Fig. 2 einen Schnitt nach der Linie II-II in Fig. 1, Fig.3 eine teilweise Seitenansicht zu Fig. 1 in vergrößtertem Maßstab beim Arbeitshub, Fig. 4 eine Darstellung nach Fig. 3, jedoch beim Leerhub und Fig. 5 einen teilweisen Schnitt nach der Linie V-V in Fig. 1.
Gemäß Fig. 1 sind auf einem Hallenboden bzw. dem Boden einer Strahlkabine mehrere (im Beispiel vier) in Pfeilrichtung arbeitende Längsförderer 1, 2, 3, 4 parallel zueinander angeordnet, die mit einem Querförderer 5 zusammenarbeiten. Jeder Längsförderer 1 bis 4 umfaßt seitliche Begrenzungsprofile 6, 7 bzw. 7, 8 bzw. 8, 9 und 9, 10, welche auf ihren Flachseiten einander zugewandt und paarweise gegenüberliegend Laufrollen 11, 12; 13, 14; 15, 16 und 17, 18 tragen. In gleicher Weise sind Rollen auch bei den Längsförderern 2, 3 und 4 vorgesehen. Auf den Rollen ruht jeweils ein als Schlitten ausgebildeter Rahmen 19 auf, der aus seitlichen Holmen 20, 21 besteht, die durch Distanzstege 22, 23 starr miteinander verbunden sind. Die Holme 20, 21 sind im Querschnitt L-förmig abgewinkelt (Fig. 2) und ruhen mit dem einen Schenkel des Profils auf den Rollen 11 bis 18 auf. Somit ist der Rahmen 19 auf den Rollen hin und her verschiebbar. Dies gilt in gleicher Weise für den Rahmen 24 des Längsförderers 2. Bei den Längsförderern 3 und 4 sind die Rahmen aus Gründen der besseren Übersichtlichkeit nicht eingezeichnet. Die Holme 20, 21 tragen Haltevorsprünge 25, 26, auf welchen Förderleisten 27 aufgehängt sind. In Fig. 2 sind die Förderleisten nur beim Längsförderer 2 eingehängt. Wie Fig. 3 zeigt, werden die Förderleisten 27 durch Bleche gebildet, die im Querschnitt abgewinkelt sind und etwa einer Ziffer "1" entsprechen. Mit ihrem V-förmigen Winkelteil sind die Förderleisten 27 auf den Haltevorsprüngen 25, 26 aufgehängt.

Aus den Fig. 3 und 4 erkennt man, daß die Förderleisten 27 bei einem Vorschub in Pfeilrichtung (Arbeitshub) nach Fig. 3 den strichliert eingezeichneten Sand nach rechts fördern, während die Förderleisten 27 bei der Retourbewegung des Rahmens 19 bzw. 24 in Pfeilrichtung gemäß Fig. 4 wegklappen und über den Sand hinweggleiten.

Der Antrieb der Rahmen 19 bzw. 24 erfolgt bei einer konkret ausgeführten Anlage hydraulisch durch einen reversierend gesteuerten Druckzylinder mit zweiseitig beaufschlagtem Kolben, dessen Kolbenstange direkt an den Rahmen angreift. Je Längsförderer ist ein eigener Antrieb vorgesehen. Die Antriebe sind in den Zeichnungen nicht dargestellt.

Der Querförderer 5 ist ähnlich den Längsförderern 1, 2, 3 und 4 ausgebildet. Es sind wiederum Förderleisten 28 vorgesehen, die auf Haltevorsprüngen 29, 30 hängen, welche von Holmen 31, 32 eines Rahmens 33 auskragen. Die pneumatischen doppelt wirkenden Zylinder (nicht dargestellt) übertragen eine hin- und hergehende Bewegung auf den Rahmen 33,der zusammen mit den Förderleisten 28 den seitlich in den Querförderer 5 eingeschobenen Sand in Pfeilrichtung transportiert. Während der Holm 32 auf Rollen 34 lagert, die von einem Begrenzungsprofil 35 auskragen, liegt der Holm 31 auf Rollen 36 auf, die stirnseitig an den Begrenzungsprofilen 7, 8 und 9 vorgesehen sind. Der Holm 31 des Rahmens 33 weist einen verkürzten vertikalen Schenkel auf, sodaß ein freier Durchgang bzw. Übergang zwischen den Längsförderern 1, 2; 3 und 4 und dem Querförderer 5 entsteht (Pfeil 37 in Fig.5). Fig. 5 zeigt ferner, daß die gesamte Fördereinrichtung in einer Ebene, nämlich der Bodenebene der Halle oder der Sandstrahlkabine vorgesehen ist.

Am Ende des Förderweges des Querförderers 5 ist ein Becherwerk 38 (Fig. 1) angeordnet, das den herbeigeförderten Sand aufnimmt, hochtransportiert und einer Aufbereitungsanlage zuführt. Danach gelangt der Sand wieder in die Hochdruckstrahlanlage.

Fig. 2 zeigt ferner am Beispiel des Längsförderers 2, daß die seitlichen Holme 39, 40 auch als T-Profile ausgebildet sein können. Der eine horizontale Profilsteg des T-Profils läuft auf den Rollen, während der andere, symmetrische, die Förderleisten 27 an ihren oberen Enden übergreift und so ein Abheben derselben verhindert. Diese Holmausführung kann bei den Rahmen der Längsförderer (1, 2, 3, 4) wie auch des Querförderers (5) verwendet werden.

Sowohl Längsförderer 1, 2, 3 und 4 als auch Querförderer 5 können jeweils an Stelle eines einzigen langen Rahmens 19, 24, 33 über mehrere hintereinander liegende und miteinander gekuppelte kurze Rahmen auf den Rollenbahnen verfügen. Diese kurzen Rahmen sind nicht nur einfacher herstellbar als solche Rahmen, die sich annähernd über die gesamte Länge des Förderers erstrecken, sie können auch leichter eingebaut und einfacher gewartet werden. Das Becherwerk 38 ist in ein und derselben Ebene angeordnet, wie die Längsförderer 1, 2, 3 und 4 und der Querförderer 5. Es ist nicht zwingend erforderlich, das Becherwerk 38 am Ende des Querförderers 5 in eine Grube zu stellen. Damit erübrigen sich sämtliche baulichen Maßnahmen an einem Hallenboden. Die gesamte Anlage kann überall unmittelbar aufgestellt und in Betrieb genommen werden. Sollte eine Ortsveränderung der Sandstrahlanlage innerhalb eines Unternehmens erforderlich sein, so kann die Verlagerung kurzfristig und rasch ohne Eingriff in die Bausubstanz durchgeführt werden.

## Patentansprüche

1. Fördereinrichtung für Schüttgut, insbesondere Strahlmittel für Sandstrahlanlagen mit mindestens einem Längsförderer, der in einen Querförderer einmündet, wobei die Förderer eine Vielzahl von in Förderrichtung hin- und hergehenden, nach einer Seite umklappbaren Förderleisten aufweisen, dadurch gekennzeichnet, daß Längsförderer (1, 2, 3, 4) und Querförderer (5) in ein- und derselben Ebene angeordnet sind und der bzw. die Längsförderer (1, 2, 3, 4) parallel zueinander stillstehende seitliche Begrenzungsprofile (6, 7, 8, 9, 10), z.B. I-Profile, mit gegeneinander vorspringenden Rollen (11 bis 18) aufweisen, auf welchen mindestens ein als Schlitten ausgebildeter Rahmen (19 ,24), in den die Förderleisten (27) eingehängt sind, vorzugsweise pneumatisch längsverschiebbar gelagert ist und daß der analog ausgebildete Querförderer (5) im Bereich der Einmündung bzw. Einmündungen des oder der Längsförderer (1, 2, 3, 4) seitlich offen ist und ein die Förderleisten (28) tragender Rahmen (33) des Querförderers (5) auf Rollen (34, 36) gelagert ist, die einmündungsseitig auf den Stirnseiten der Begrenzungsprofile (7, 8, 9) des oder der Längsförderer (1, 2, 3, 4) angeordnet sind, während die Rollen (34) außerhalb der Einmündungsbereiche auf eigenen Begrenzungsprofilen (35) gelagert sind.

2. Fördereinrichtung nach Anspruch 1, dadurch gekennzeichnet, daß die Rahmen (19, 24, 33) der Längsförderer (1, 2, 3, 4) und des Querförderers (5) an ihren seitlichen Holmen (20, 21; 34, 36; 39, 40) oder Blechen einander gegenüberliegend etwa vertikal ausgerichtete Haltevorsprünge (25, 26, 29, 30), z.B. Blechnasen, aufweisen, in welche die als V-förmig abgewinkelte Bleche mit einem im Querschnitt langen und einen kurzen Schenkel ausgebildeten Förderleisten (27, 28) eingehängt sind.

3. Fördereinrichtung nach Anspruch 2, dadurch gekennzeichnet, daß die Holme (39, 40) ein T-Profil aufweisen, dessen einer waagrechter Profilsteg auf den Rollen (11 bis 18; 34,36) aufliegt, während der andere waagrechte Profilsteg die Förderleisten (27) randseitig übergreift.

4. Fördereinrichtung nach einem der Ansprüche 1 bis 3, dadurch gekennzeichnet, daß in der Förderebene der Längsförderer (1, 2, 3, 4) und des Querförderers (5) im Anschluß an das Förderende desselben ein an sich bekanntes Becherwerk (38) zum Hochfördern des Schüttgutes vorgesehen ist.

## Claims

1. Conveying device for bulk material, in particular blasting media for sand blasting installations, with at least one longitudinal conveyor which leads into a transverse conveyor, wherein the conveyors have a plurality of conveying strips which reciprocate in the direction of conveying and can be folded over to one side, characterised in that longitudinal conveyors (1, 2, 3, 4) and transverse conveyor (5) are arranged in one and the same plane and the longitudinal conveyor or conveyors (1, 2, 3, 4) have lateral boundary profiles (6, 7, 8, 9, 10), e.g. I-profiles, which are stationary & parallel to each other, with rollers (11 to 18) which project towards each other and on which at least one frame (19, 24) constructed as a carriage, in which the conveying strips (27) are suspended, is mounted preferably so as to be longitudinally displaceable pneumatically, and in that the analogously constructed transverse conveyor (5) is laterally open in the region of entry of the longitudinal conveyor or conveyors (1, 2, 3, 4), and a frame (33) of the transverse conveyor (5), carrying the conveying strips (28) is mounted on rollers (34, 36) which are arranged on the entry side on the fronts of the boundary profiles (7, 8, 9) of the longitudinal conveyor or conveyors (1, 2, 3, 4), while the rollers (34) are mounted outside the entry regions on their own boundary profiles (35).

2. Conveying device according to claim 1, characterised in that the frames (19, 24, 33) of the longitudinal conveyors (1, 2, 3, 4) and transverse conveyor (5) on their lateral cross-beams (20,21;34,36;39,40) or panels have retaining projections (25, 26, 29, 30), e.g. metal lugs, which are oriented approximately vertically opposite each other and in which are suspended the conveying strips (27, 28) constructed as panels angled in a V-shape with one long and one short arm in cross-section.

3. Conveying device according to claim 2, characterised in that the cross-beams (39, 40) have a T-profile of which one horizontal profile web rests on the rollers (11 to 18; 34, 36), while the other horizontal profile web overlaps the conveying strips (27) at the edge.

4. Conveying device according to any of claims 1 to 3, characterised in that in the plane of conveying of the longitudinal conveyors (1, 2, 3, 4) and transverse conveyor (5), adjoining the conveying end thereof, is provided a bucket elevator (38), known as such, for raising the bulk material.

## Revendications

1. Dispositif de transport pour un produit en vrac, en particulier pour un produit à projeter pour installations de sablage, comportant au moins un transporteur longitudinal, débouchant dans un transporteur transversal, les transporteurs présentant une pluralité de barres transporteuses, soumises à un mouvement de va et vient dans la direction du transport, rabattables d'un côté, caractérisé en ce que les transporteurs longitudinaux (1,2,3,4) et le transporteur transversal (5) sont disposés dans un seul et même plan et en ce que le ou les transporteurs longitudinaux (1,2,3,4) présentent des profilés latéraux de limitation (6,7,8,9,10), stationnaires et parallèles, par exemple des profils en I, avec des galets (11 à 18) faisant saillie les uns vers les autres, sur lesquels au moins un cadre (19,24), réalisé sous forme de coulisseau, dans lequel les barres de transport (27) sont accrochées, est monté déplaçable longitudinalement, par voie pneumatique, et en ce que le transporteur transversal (5), de réalisation analogue, est ouvert sur le côté, dans la zone de l'embouchure ou des embouchures du ou des transporteurs longitudinaux (1,2,3,4) et aussi en ce qu'un cadre (33), portant les barres de transport (28), du transporteur transversal (5) soit monté sur des galets (34,36), disposés du côté embouchure, sur les faces frontales des profilés de limitation (7,8,9) du ou des transporteurs longitudinaux (1,2,3,4), tandis que les galets (34) tourillonnent à l'extérieur de la zone d'embouchure, sur des profilés de limitation (35) propres.

2. Dispositif de transport selon la revendication 1, caractérisé en ce que les cadres (19,24,33) des transporteurs longitudinaux (1,2,3,4) et du transporteur transversal (5) présentent, sur leurs montants latéraux (20,21;34, 36;39,40) ou sur leurs tôles, des saillies d'arrêt/fixation (25,26, 29,30) se faisant face, orientées à peu près verticalement, par exemple des ergots en tôle, dans lesquels sont accrochées les tôles pliées en V, l'aide d'une barre de transport (27, 28) à section transversale allongée et à branche courte.

3. Dispositif de transport selon la revendication 2, caractérisé en ce que les montants (39,40) présentent un profilé en T, dont une branche de profilé horizontale repose sur les galets (11 à 18; 34,36), tandis que l'autre branche de profilé horizontale entoure la bordure des barres profilées (27).

4. Dispositif de transport selon l'une des revendications 1 à 3, caractérisé en ce qu'un mécanisme à godets (38), destiné à soulever un produit en vrac est prévu dans le plan de transport du transporteur longitudinal (1,2,3,4) et du transporteur transversal (5), raccordé à l'extrémité de transport de celui-ci.
